# EUROPEAN PATENT APPLICATION

(11) **EP 3 056 675 A1**
(43) Date of publication of application: **17.08.2016**
(21) Application number: 16155989.3
(22) Date of filing: 16.02.2016
(51) Int. Cl.: F01D 5/18

(54) **SYSTEMS AND METHODS FOR VANE COOLING**

(30) Priority: 16.02.2015 US 201514623473
(71) Applicant: United Technologies Corporation, Farmington, CT 06032 (US)
(72) Inventor: CHAKKA, Pitchaiah V., Avon, Connecticut 06001 (US); CLUM, Carey, East Hartford, Connecticut 06118 (US); PRAISNER, Thomas J., East Hartford, Connecticut 06108 (US); CHRISTOPHEL, Jesse R., Manchester, Connecticut 06042 (US)
(74) Representative: Leckey, David Herbert

(57) **Abstract**

An airfoil (200; 360; 700) is disclosed comprising a distal edge (224; 324), a proximal edge (222; 326), a pressure side surface (238) extending between the distal edge (224; 324) and the proximal edge (222; 326) and between a leading edge (236; 736) and a trailing edge (242; 742), the leading edge (236; 736) forward of the trailing edge (242; 742), wherein a first cooling hole (216; 316) and a second cooling hole (218; 318) are disposed in the pressure side surface (238), wherein the first cooling hole (216; 316) is oriented at a first angle (θ) relative to the distal edge (224; 324) and the second cooling hole (218; 318) is oriented at a second angle (φ) relative to the proximal edge (222; 326), wherein the first angle (θ) and the second angle (φ) have bilateral symmetry about a plane (230; 330), wherein the plane (230; 330) is located at a point at least one of more than or less than the midpoint between the distal edge (224; 324) and proximal edge (222; 326).

## Description

### FIELD

This disclosure relates to a gas turbine engine, and more particularly, to cooling hole arrangements on an airfoil such as a vane.

### BACKGROUND

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

The efficiency of the engine can be increased by passing a higher temperature gas flow through the turbine. However, the turbine inlet temperature is limited to the vane and blade (airfoils) material properties and the cooling capabilities of these airfoils. The first stage airfoils are exposed to the highest temperature gas flow since these airfoils are located immediately downstream from the combustor.

### SUMMARY

An airfoil is disclosed comprising a distal edge, a proximal edge, a pressure side surface extending between the distal edge and the proximal edge and between a leading edge and a trailing edge, the leading edge forward of the trailing edge, wherein a first cooling hole and a second cooling hole are disposed in the pressure side surface, wherein the first cooling hole is oriented at a first angle relative to the distal edge and the second cooling hole is oriented at a second angle relative to the proximal edge, wherein the first angle and the second angle have bilateral symmetry about a plane, wherein the plane is located at a point at least one of more than or less than the midpoint between the distal edge and proximal edge.

An airfoil is disclosed comprising a distal edge, a proximal edge, a pressure side surface extending between the distal edge and the proximal edge and between a leading edge and a trailing edge, the leading edge forward of the trailing edge, wherein a first cooling hole and a second cooling hole are disposed in the pressure side surface, wherein the first cooling hole is oriented at a first angle relative to the distal edge and the second cooling hole is oriented at a second angle relative to the proximal edge, and a third hole is disposed on the pressure side surface at a third angle which is different from the first angle and second angle.

### BRIEF DESCRIPTION OF THE DRAWINGS

Figure 1 illustrates an example turbine engine, in accordance with various embodiments.
Figure 2 illustrates a vane configuration with cooling holes, in accordance with various embodiments;
Figure 3 illustrates a vane cooling hole configuration of prior art;
Figures 4a and 4b illustrate an exemplary vane cooling hole configuration, in accordance with various embodiments;
Figure 5 illustrates a vane exit temperature profile of prior art
Figures 6a and 6b illustrate an exemplary vane exit temperature profile, in accordance with various embodiments; and
Figure 7 illustrates an airfoil section from leading edge to half axial chord length, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine. As used herein, "airfoil" and "vane" are used interchangeably.

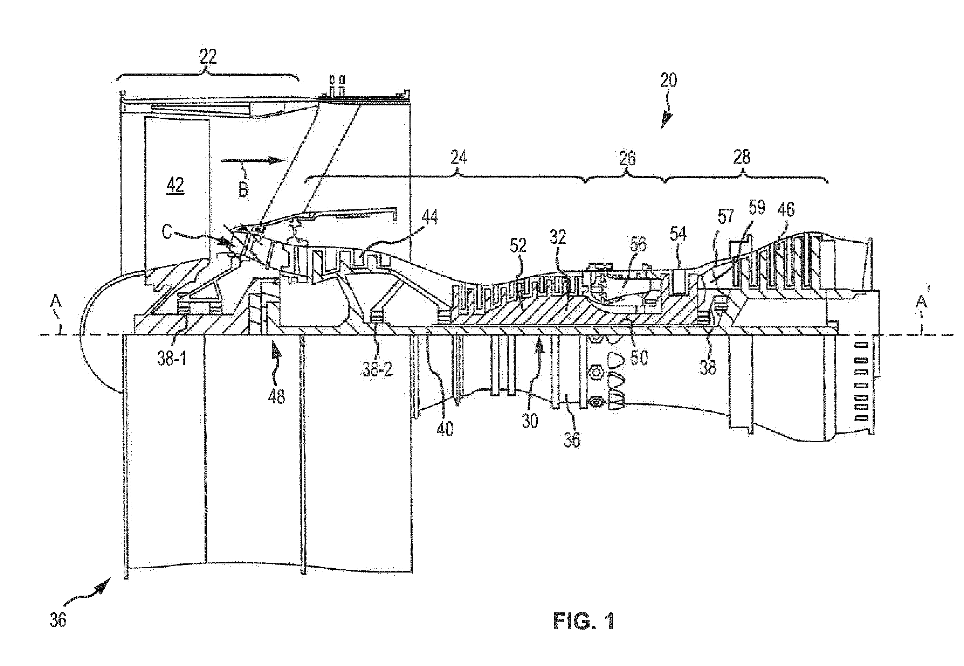

In various embodiments and with reference to FIG. 1, a gas turbine engine 20 is provided. Gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A-A' relative to an engine static structure 36 via one or more bearing systems 38 (shown as bearing system 38-1 and bearing system 38-2 in FIG. 1). It should be understood that various bearing systems 38 at various locations may alternatively or additionally be provided, including for example, bearing system 38, bearing system 38-1, and bearing system 38-2.

The low speed spool 30 may generally comprise an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine ("HPT") 54. A combustor 56 is arranged in exemplary gas turbine 20 between the high pressure compressor 52 and the HPT 54. A mid-turbine frame 57 of the engine static structure 36 is arranged generally between the HPT 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow is compressed by the low pressure compressor 44 then the high pressure compressor 52, mixed and burned with fuel in the combustor 56, then expanded over the HPT 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 50 may be varied. For example, gear system 50 may be located aft of combustor section 26 or even aft of turbine section 28, and fan section 22 may be positioned forward or aft of the location of gear system 48.

Gas turbine engine 20 may be, for example, a high-bypass geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about 5. In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans.

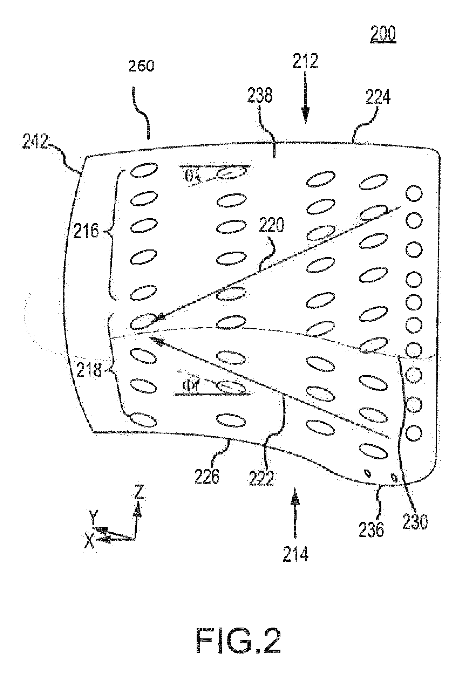

FIG. 2 schematically illustrates an isometric view of a HPT 54 vane configuration 200. Vane configuration 200 illustrates first stage stator vane 260 for a turbine section 28 (with momentary reference to FIG. 1). However, it is to be understood that other types of airfoils arranged downstream from a combustor and/or other parts of the gas turbine engine 20 may benefit from the examples disclosed herein which are not limited to the design shown.

The turbine section 28 includes at least one array of stator vane 260 arranged circumferentially about an engine axis A-A' to define an outer radial flow path boundary for a core flow path C. Cooling air 212 and 214 may be directed from, for example, the compressor section 24 through bypass ducts and into vane configuration 200. A pressure gradient may force cooling air 212 and cooling air 214 through cooling hole set 216 and cooling hole set 218. Cooling air 212 may enter airfoil 200 via distal edge 224. Cooling air 214 may enter airfoil 200 via proximal edge 226. The cooling air 212 and 214 may exit vane 200 through cooling holes 216 and 218 and enter core flow path C. This cooling air may provide film cooling and convective cooling to reduce the vane operating temperature. Pressure side surface 238 extends from distal edge 224 to proximal edge 222. Leading edge 236 is shown on the pressure side surface 238 forward of trailing edge 242.

In various embodiments, the orientation of cooling holes 216 and cooling holes 218 may be angled about a plane that intersects the z axis at only a single point. Plane 230 passes through the center of each respective vane. In other words, each vane has its own respective plane 230 defined as a plane that intersects the z axis at only a single point. Each plane 230 may also be described as a plane which is normal to a line extending in the span-wise direction of the vane. In various embodiments, cooling holes 216 may be angled so that a trailing point of cooling holes 216 points towards the negative z-direction. Stated another way, cooling holes 216 may be angled in the positive theta (Θ) direction. A cooling hole which is part of cooling holes 216 may be referred to as a first cooling hole. In various embodiments, cooling holes 218 may be angled so that a trailing point of cooling holes 218 points towards plane 230 in the positive z-direction. In other words, cooling holes 218 may be angled in the positive phi (Φ) direction. A cooling hole which is part of cooling holes 218 may be referred to as a second cooling hole. In various embodiments, optimal angles theta (Θ) and phi (Φ) may be between fifteen (15) degrees and thirty-five (35) degrees, though as presently illustrated, angles theta (Θ) and phi (Φ) are approximately twenty-five (25) degrees. In various embodiments, angle theta (Θ) may be referred to as a first angle. In various embodiments, angle phi (Φ) may be referred to as a second angle.

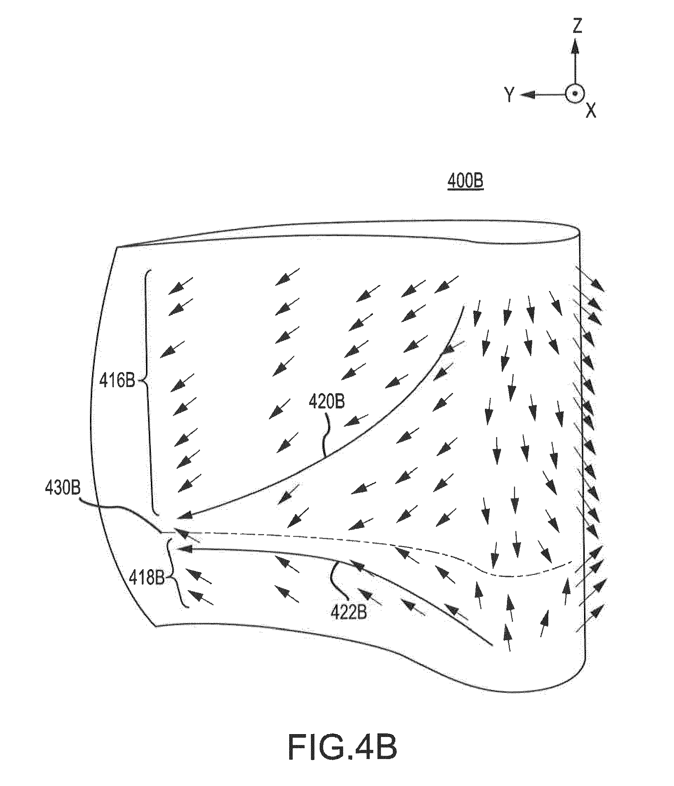

In various embodiments, with reference to FIG 4B and continued reference to FIG 2, cooling air may exit cooling holes 216 and flow in a direction closely aligned with arrows 416B forming cooling flow streamlines as exemplified by arrow 420B. Arrows 416B may also be defined as vectors. Similarly, cooling air may exit cooling holes 218 and flow in a direction closely aligned with arrows 418B forming cooling flow streamlines as exemplified by arrow 422B. In this manner, it can be said that plane 430B is a plane across which the orientation of cooling holes 216 and 218 are mirrored such that cooling flow streamlines 420B and 422B converge in close proximity to plane 430B. Cooling hole angles theta (Θ) and phi (Φ) are closely aligned with arrows 418A and arrows 418B respectively.

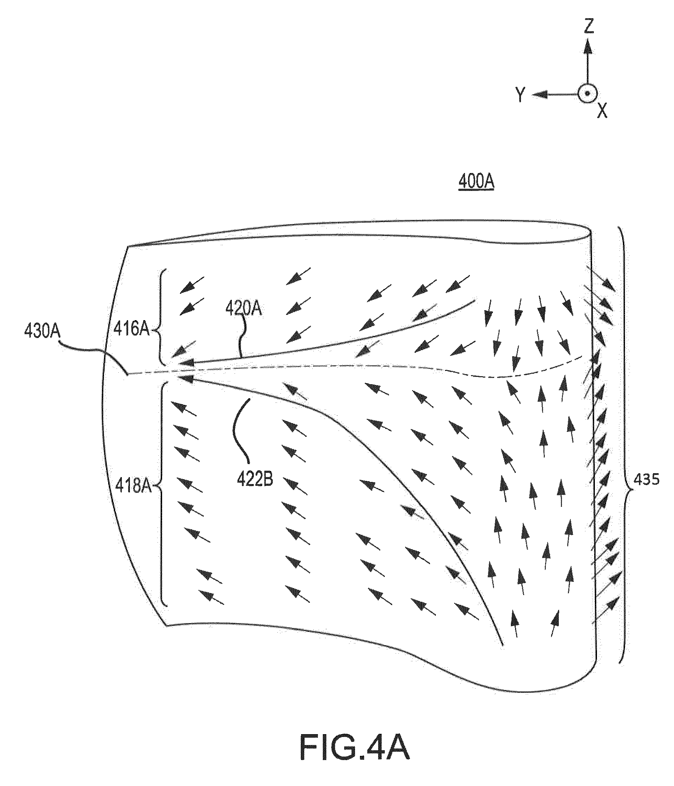

In various embodiments, with further reference to FIG 4A, the plane about which cooling holes are mirrored may not be a tangible plane, but may be a location on the airfoil about which the orientation of the cooling holes is mirrored. In further embodiments, plane 430A and 430B may not be a plane about which the cooling hole angles are mirrored, but rather a plane about which the cooling hole angles change from theta (Θ) to phi (Φ). For example, if theta (Θ) and phi (Φ) are not exactly the same, then by definition the angles are not mirrored. In various embodiments, a cooling hole which is oriented at an angle which is not mirrored about a plane may be referred to as a cooling hole at a third angle. In further embodiments, angles theta (Θ) and phi (Φ) may be different in order to tailor for different design purposes.

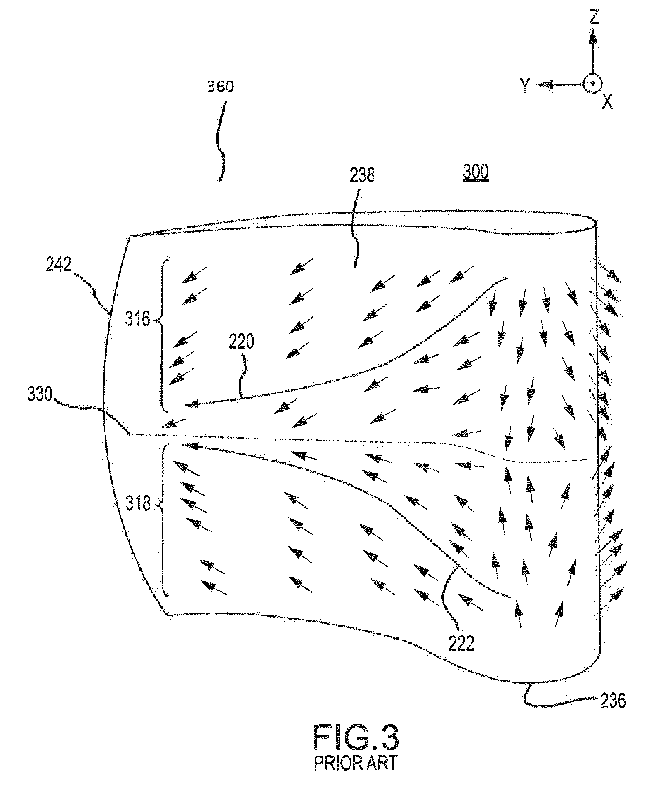

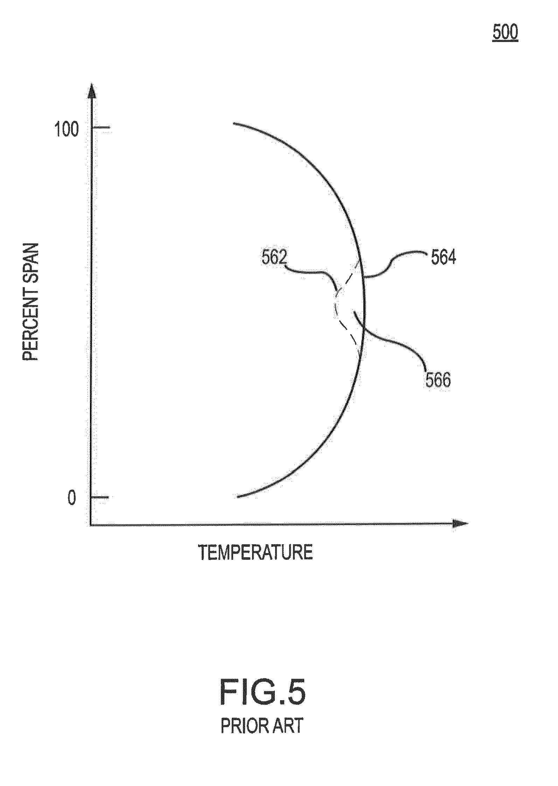

With reference to FIG 3 and FIG 5, current cooling hole orientations are configured such that cooling flow streamlines 320 and 322 converge in a location in close proximity to plane 330 on vane 300. The location of plane 330 may be defined as being situated at a percentage of the span 335 of airfoil 360. Airfoil 360 spans from proximal edge 326 to distal edge 324 across span 335. Proximal edge 326 may be defined as being located at zero percent (0%) span of airfoil 360. Distal edge 324 may be defined as being located at one hundred percent (100%) span of airfoil 360. Plane 330 is located at the mid-span of airfoil 300. The mid-span may be defined as being located at fifty percent (50%) span.

With reference to FIG. 5, a graph of operating temperature (on the x axis) and percent span (on the y axis) is shown for vane 300. Because cooling flow streamlines 320 and 322 converge at the mid-span of airfoil 300, a cool spot 566 is noted in the vane exit temperature profile as shown in FIG 5. Line 564 represents a vane exit temperature profile of a vane without converging cooling flow streamlines. Line 562 represents a vane exit temperature profile of a vane with cooling flow streamlines converging at the mid-span of the vane.

In various embodiments, cooling holes may introduced into an airfoil in any suitable manner. For example, cooling holes may be formed by electric discharge machining (EDM) methods. The use of EDM allows the orientation of cooling holes 316 and cooling holes 318 to be closely tailored. EDM is a manufacturing process whereby a desired shape is obtained using electrical discharges. Tailoring first stage turbine vane exit temperature profiles may be desirable for different design considerations. For example, combustor exit temperature profiles may benefit from a higher rate of cooling in certain areas on turbine vanes and blades. For example, components downstream of turbine vanes, such as other airfoils, may benefit from localized cooling which may be achieved by tailoring a turbine vane exit temperature profile.

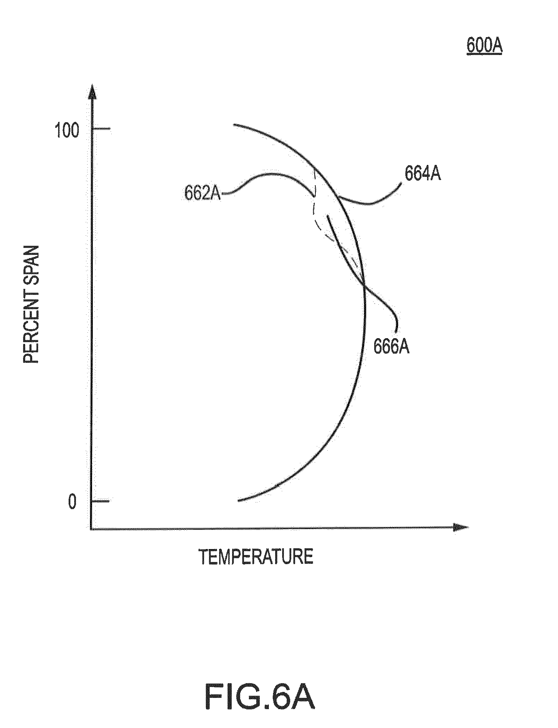

In various embodiments, with reference to FIG 4A and FIG 6A, the location of plane 430A may be located at a point other than mid-span (i.e., 50% span). The exemplary illustration of FIG 4A shows plane 430A being located at approximately seventy-five percent (75%) span. By disposing plane 430A at approximately seventy-five percent (75%) span, the region of convergence of cooling air shifts to the approximate location of plane 430A. Shifting the region of convergence of cooling air may allow the vane exit temperature profile 662A in FIG 6A to be tailored such that cool spot 666A is located at seventy-five percent (75%) span as viewed on the y-axis.

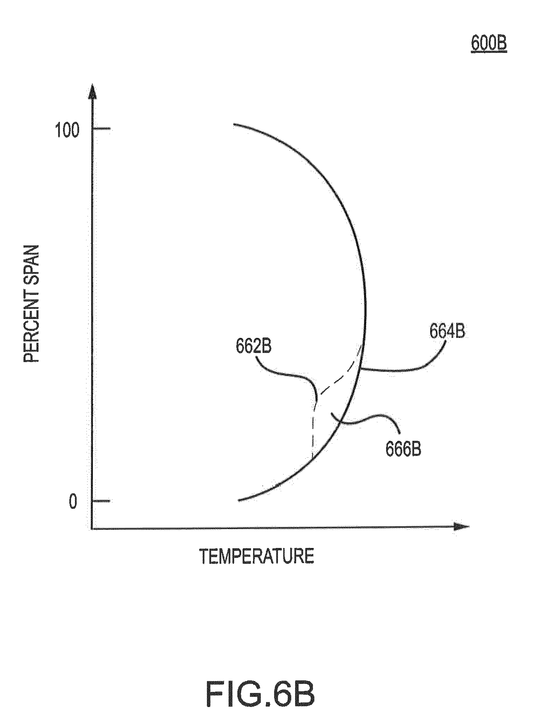

In various embodiments, with reference to FIG 4B and FIG 6B, the location of plane 430B may be located at a point other than mid-span (i.e., 50% span). The exemplary illustration of FIG 4B shows plane 430B being located at approximately twenty-five percent (25%) span. By disposing plane 430B at twenty-five percent (25%) span, the region of convergence of cooling air shifts to the approximate location of plane 430B. Shifting the region of convergence of cooling air may allow the vane exit temperature profile 662B in FIG 6B to be tailored such that cool spot 666B is located at twenty-five percent (25%) span as viewed on the y-axis.

In various embodiments, with renewed reference to FIGs 4A and 4B, the size and shape of cooling holes 416A, 416B, 418A, and 418B may vary. Cooling holes holes 416A, 416B, 418A, and 418B can be any variation of circular, ovular, rectangular, triangular, or any other shape in cross section.

In various embodiments, with reference to FIG 2, plane 230 in each vane in an array of stator vanes 260 may include the same cooling hole configuration as other vanes in the array. For example, each vane in an array may include cooling holes which are mirrored about a plane located in the same radial location as the neighboring vane. In various embodiments, the angle of cooling holes 216 and cooling holes 218 in each vane in an array of stator vanes may be the same as other vanes in the array. For example, each vane in an array may include cooling holes oriented at the same angle as the neighboring vane.

In various embodiments, exhaust flow temperature profiles may benefit from more complex cooling configurations. For example, certain components may benefit from higher rates of cooling than other areas. In various embodiments, the angle of cooling holes 216 and cooling holes 218 in each vane in an array of stator vanes 260 may be different than other vanes in the array. For example, each vane in an array may include cooling holes oriented at a different angle than the neighboring vane. In various embodiments, each vane in an array may include cooling holes which are mirrored about a plane located in a different radial location (e.g., along the z axis) than the neighboring vane. The two airfoils in FIG 2 may be referred to as neighboring vanes because they are located next to each other in the circumferential direction.

In various embodiments, cooling hole angles theta (Θ) and phi (Φ) may be tailored to affect cool spot 666A and 666B, with brief reference to FIG. 6A and 6B. If increased cooling is desired, angles theta (Θ) and phi (Φ) may be increased in order to concentrate cooling air flow on a particular location to increase cooling. Similarly, angles theta (Θ) and phi (Φ) may be decreased in order to disperse the cooling air flow for decreased localized convergence of cooling air.

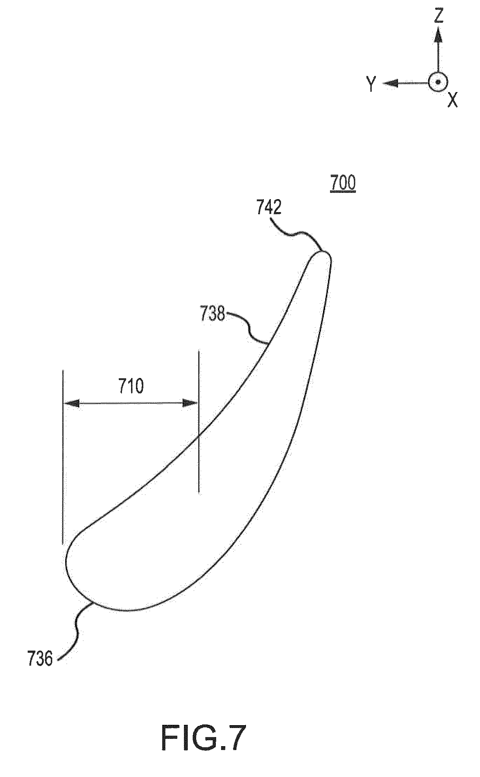

In various embodiments, with reference to FIG 7, airfoil 700 may be defined as having a leading edge 736 on the forward side, a trailing edge 742 on the aft side, and a pressure side 738. Cooling holes may be located on the leading edge and pressure side of airfoil 700 and also within the first half of the axial chord length 710 of airfoil 700. Cooling holes located in the first half of the axial chord length 710 may have the greatest effect on the airfoil exit temperature profile.

The method of creating the cooling holes may include any method of drilling, boring, or cutting as well as any other method known to persons of ordinary skill in the art. According to various embodiments, cooling holes are formed via EDM. According to various embodiments, cooling holes are formed via additive manufacturing processes. According to various embodiments, cooling holes are formed via subtractive manufacturing processes.
Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An airfoil (200; 360; 700) comprising:
a distal edge (224; 324);
a proximal edge (222; 326);
a pressure side surface (238) extending between the distal edge (224; 324) and the proximal edge (222; 326) and between a leading edge (236; 736) and a trailing edge (242; 742), the leading edge (236; 736) forward of the trailing edge (236; 736);
wherein a first cooling hole (216; 316) and a second cooling hole (218; 318) are disposed in the pressure side surface (238),
wherein the first cooling hole (216; 316) is oriented at a first angle (θ) relative to the distal edge (224; 324) and the second cooling hole (218; 318) is oriented at a second angle (φ) relative to the proximal edge (222; 326),
wherein the first angle (θ) and the second angle (φ) have bilateral symmetry about a plane (230; 330),
wherein the plane (230; 330) is located at a point at least one of more than or less than the midpoint between the distal edge (224; 324) and proximal edge (222; 326).

2. The airfoil of claim 1, further comprising a third hole disposed on the pressure side surface (238) at a third angle which is different from the first angle (θ) and second angle (φ).

3. The airfoil of claim 1 or 2, wherein the first cooling hole (216; 316) and the second cooling hole (218; 318) are configured to direct cooling air to a point on the plane (230; 330).

4. An airfoil (200; 360; 700) comprising:
a distal edge (224; 324);
a proximal edge (222; 326);
a pressure side surface (238) extending between the distal edge (224; 324) and the proximal edge (222; 326) and between a leading edge (236; 736) and a trailing edge (242; 742), the leading edge (236; 736) forward of the trailing edge (242; 742);
wherein a first cooling hole (216; 316) and a second cooling hole (218; 318) are disposed in the pressure side surface (238),
wherein the first cooling hole (236; 316) is oriented at a first angle (θ) relative to the distal edge (224; 324) and the second cooling hole (218; 318) is oriented at a second angle (φ) relative to the proximal edge (222; 326), and
a third hole is disposed on the pressure side surface (238) at a third angle relative to the distal edge (224; 324) which is different from the first angle (θ) and second angle (φ).

5. The airfoil claim 4, wherein the first angle (θ) and the second angle (φ) have bilateral symmetry about a plane (230; 330), wherein the plane (230; 330) is located at a point at least one of more than or less than the midpoint between the distal edge (224; 324) and proximal edge (222; 326).

6. The airfoil of any preceding claim, wherein the airfoil (200; 360; 700) is a vane (300).

7. The airfoil of any preceding claim, wherein the first cooling hole (216; 316) and the second cooling hole (218; 318) are configured to direct cooling air towards the trailing edge (236; 736) of the airfoil (200; 360; 700).

8. The airfoil of any preceding claim, wherein the first angle (θ) is between 15 and 35 degrees.

9. The airfoil of any preceding claim, wherein the first cooling hole (216; 316) and the second cooling hole (218; 318) are located within half a chord length of the leading edge (236; 736).

10. The airfoil of any preceding claim, wherein the first cooling hole (216; 316) is formed through a subtractive manufacturing process.

11. The airfoil of any preceding claim, wherein the first cooling hole (216; 316) is formed through an electric discharge machining process.

12. A method of vectoring cooling air flow comprising:
disposing a first cooling hole (216; 316) radially on an airfoil (200; 360; 700);
disposing a second cooling hole (218; 318) radially on an airfoil (200; 360; 700);
orienting the first cooling hole (216; 316) to have bilateral symmetry with the second cooling hole (218; 318) across a plane (230; 330) extending from a leading edge (236; 736) of the airfoil (200; 360; 700) to the trailing edge (242; 742) of the airfoil (200; 360; 700),
wherein the first cooling hole (216; 316) and the second cooling hole (218; 318) direct cooling to air to converge at a point that is at least one of more than or less than the midpoint between a proximal edge (222; 326) and a distal edge (224; 324) of the airfoil (200; 360; 700).

13. The method of claim 12, wherein the disposing the first cooling hole (216; 316) comprises disposing the first cooling hole (216; 316) at a first angle (θ) relative to the distal edge (224; 324) between 15 and 35 degrees.

14. The method of claim 12 or 13, wherein the disposing the first cooling hole (216; 316) comprises an electric discharge machining process.
